# EUROPEAN PATENT APPLICATION

(11) **EP 4 671 310 A1**
(43) Date of publication of application: **31.12.2025**
(21) Application number: 24760127.1
(22) Date of filing: 07.02.2024
(51) Int. Cl.: C08G 77/38

(54) **METHOD FOR PRODUCING RADICAL POLYMERIZABLE GROUP-CONTAINING ORGANOPOLYSILOXANE, AND RADICAL POLYMERIZABLE GROUP-CONTAINING ORGANOPOLYSILOXANE**

(30) Priority: 20.02.2023 JP 2023024573
(71) Applicant: SHIN-ETSU CHEMICAL CO., LTD., Tokyo 1000005 (JP)
(72) Inventor: KANAI Tomoya, Annaka-shi, Gunma 379-0224 (JP)
(74) Representative: Ipsilon
(86) International application number: PCT/JP2024/004047
(87) International publication number: WO 2024/176825

(57) **Abstract**

[Problem]

One of the purposes of the present invention is to provide a simple method to reduce the hydrochloride amount of an organic base dissolved in a radical-polymerizable group-containing organopolysiloxane.

[Solution]

A method for preparing a radical-polymerizable group-containing organopolysiloxane, comprising a reaction step of reacting (A) an organopolysiloxane having one or more monovalent organic groups per molecule, wherein the organic group has a group, at a terminal, selected from a hydroxy group, a thiol group, and an amino group having an active hydrogen with (B) a radical-polymerizable group-containing carboxylic acid chloride in the presence of (C) an organic base to obtain the radical-polymerizable group-containing organopolysiloxane, wherein the method comprises a filtration step of removing a hydrochloride of the organic base (C) generated in the reaction step with a filtration to obtain a crude product, and a purification step of adding silica gel in an amount of 0.5 to 20 parts by mass, relative to 100 parts by mass of a nonvolatile component contained in the crude product followed by stirring and filtration under a pressure.

## Description

### TECHNICAL FIELD

The present invention relates to a method for preparing a radical-polymerizable group-containing organopolysiloxane and a radical-polymerizable group-containing organopolysiloxane.

### BACKGROUND ART

(Meth)acrylic-modified siloxanes, in which a radical-polymerizable (meth)acryloyl group is chemically bonded to an organopolysiloxane, enable a siloxane to be chemically immobilized in a cured product by heat or light, thereby sustaining the characteristics of the polysiloxane.

However, (meth)acrylic-modified siloxanes have poor compatibility with other radical-polymerizable monomers, coatings, and the like, which in some cases may cause problems, such as difficulty reacting with other curing components, or degradation of antifoaming properties and dispersibility.

Patent Literatures 1 and 2 describe compositions containing organopolysiloxane compounds having both a polyether group, which has excellent compatibility with other radical-polymerizable monomers, coatings, and the like, and a (meth)acryloyl group that is curable with heat or light.

Compounds having a structure in which a polyether block is introduced as a linker between an organopolysiloxane and a (meth)acryloyl group are typically synthesized by reacting a polyether-modified organopolysiloxane having a reactive hydroxy group at a terminal with (meth)acryloyl chloride by using an organic base, such as triethylamine, as a catalyst and acid scavenger.

Furthermore, a known method in the synthesis of compounds not containing polyethers uses an organic base to react an acid chloride having a radical-polymerizable group with an amine having an active hydrogen or a hydroxy or thiol group that will not directly bond to a silicon atom.

Patent Literature 2 describes only a filtration step as a method for removing an organic salt (triethylamine hydrochloride) by-produced during the synthesis reaction. However, this method could not remove the organic salt dissolved in the silicone component, and there was a problem in that organic salt precipitated within two months at a temperature of 15 to 30°C.

Patent Literature 3 describes a method in which reaction products are purified by silica gel column chromatography after the completion of a reaction of a hydroxy group and (meth)acryloyl chloride. However, this method has problems in that a large amount of silica gel is necessary.

Patent Literature 4 describes a method of washing triethylamine hydrochloride with brine after filtration. However, this method has problems in that separability of the aqueous layer and the organic layer is poor, the washing step requires a long period of time, and the yield of the target compound is reduced, particularly for (meth)acrylic-modified siloxanes having an ether bond at the spacer between the organopolysiloxane and the (meth)acryloyl group.

### PRIOR LITERATURES

### PATENT LITERATURES

Patent Literature 1: Japanese Patent Application Laid-Open No. 2004-149592
Patent Literature 2: Japanese Patent Application Laid-Open No. 2009-263527
Patent Literature 3: Japanese Patent Application Laid-Open No. 2006-315961
Patent Literature 4: Japanese Patent Application Laid-Open No. 2002-88119

### SUMMARY OF INVENTION

### PROBLEM TO BE SOLVED BY THE INVENTION

In consideration of the afore-mentioned circumstances, one of the purposes of the present invention is to provide a simple method to reduce the hydrochloride amount of an organic base dissolved in a radical-polymerizable group-containing organopolysiloxane.

### MEANS FOR SOLVING THE PROBLEMS

As a result of intensive research to achieve the afore-mentioned object, the inventor found that hydrochlorides of organic bases dissolved in radical-polymerizable group-containing organopolysiloxanes is easily removed by filtering after mixing and stirring it with silica gel, which led to the present invention.

Accordingly, the present invention provides a method for preparing a radical-polymerizable group-containing organopolysiloxane shown below.

A method for preparing a radical-polymerizable group-containing organopolysiloxane, comprising a reaction step of reacting (A) an organopolysiloxane having one or more monovalent organic groups per molecule, wherein the organic group has a group, at a terminal, selected from a hydroxy group, a thiol group, and an amino group having an active hydrogen with (B) a radical-polymerizable group-containing carboxylic acid chloride in the presence of (C) an organic base to obtain the radical-polymerizable group-containing organopolysiloxane,
wherein the method comprises
a filtration step of removing a hydrochloride of the organic base (C) generated in the reaction step with a filtration to obtain a crude product, and
a purification step of adding silica gel in an amount of 0.5 to 20 parts by mass, relative to 100 parts by mass of a nonvolatile component contained in the crude product, followed by stirring and filtration under a pressure.

The present invention provides the preparation method, further comprising at least one constituent feature selected from the following [1] to [4].
[1] The method for preparing a radical-polymerizable group-containing organopolysiloxane, wherein the organopolysiloxane (A) is represented by the following formula (1): 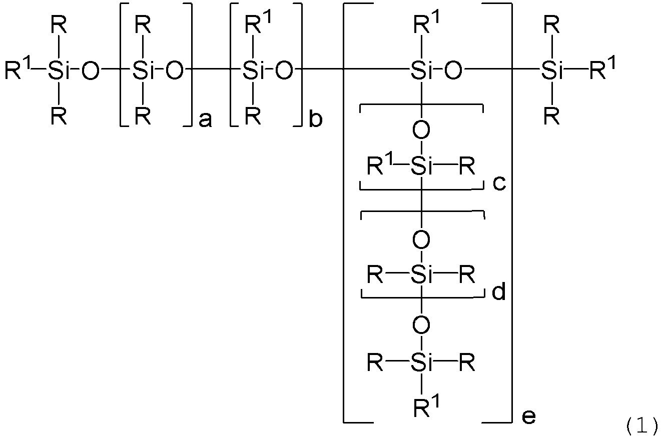
   wherein R represents, independently of each other, a monovalent hydrocarbon group having 1 to 10 carbon atoms, a, b, c and d are, independently of each other, an integer of 0 to 500, e is an integer of 0 to 10, and a, b, c, d and e satisfies an equation of 0 ≤ a + b + (c + d)×e ≤ 500, and
   R¹ represents, independently of each other, a group defined as R or a group represented by the following formula (2) or (3): 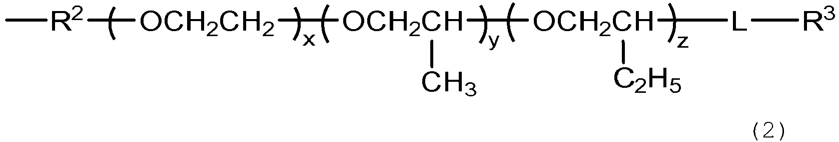
   wherein R² represents a divalent hydrocarbon group having 3 to 20 carbon atoms, R³ represents a hydrogen atom or a monovalent hydrocarbon group having 1 to 6 carbon atoms, L represents an oxygen atom or a sulfur atom, x, y, and z are, independently of each other, an integer of 0 to 50, x, y, and z satisfies an equation of 0 ≤ x + y + z ≤ 50, and the parenthesized oxyalkylene units may form a block structure or randomly bond; 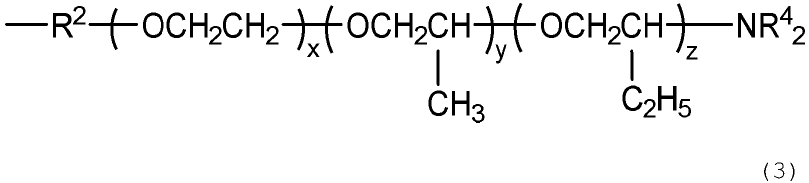 wherein R⁴ represents a hydrogen atom or a monovalent hydrocarbon group having 1 to 6 carbon atoms, R², x, y, and z are as defined above, and the parenthesized oxyalkylene units may form a block structure or randomly bond,
   with the proviso that one or more of R¹s are a group represented by formula (2) wherein R³ is a hydrogen atom, or a group represented by formula (3) wherein at least one R⁴ is a hydrogen atom, and the parenthesized siloxane units in the formula (1) may randomly bond.
[2] The method for preparing the radical-polymerizable group-containing organopolysiloxane, wherein component (B) is one or more selected from the group consisting of acryloyl chloride and methacryloyl chloride.
[3] The method for preparing the radical-polymerizable group-containing organopolysiloxane, wherein component (C) is an organic amine.
[4] The method for preparing the radical-polymerizable group-containing organopolysiloxane, wherein an amount of precipitate, as determined after leaving for three months at 25 °C, of the hydrochloride of the organic base (C) contained in the radical-polymerizable group-containing organopolysiloxane obtained in the purification step is 1 ppm or less, relative to the mass of the organopolysiloxane.

Furthermore, the present invention provides a radical-polymerizable group-containing organopolysiloxane represented by the following formula (4): 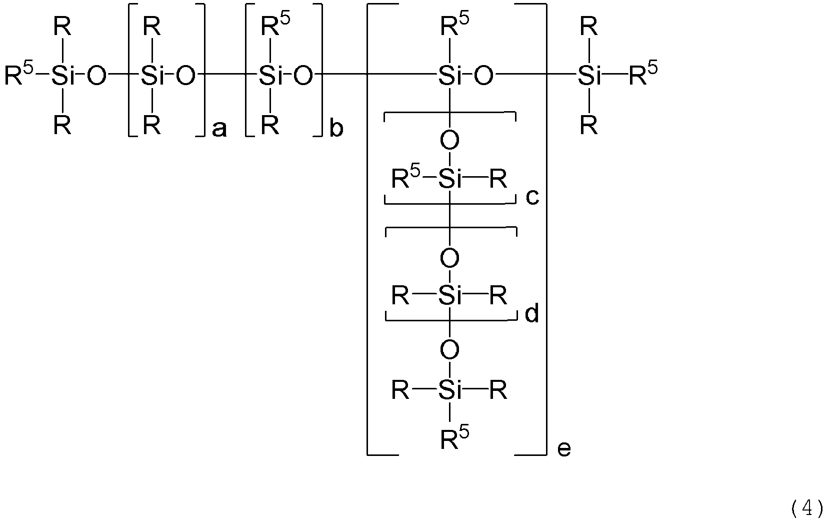 wherein R, a, b, c, d and e are as defined above, and R⁵ represents, independently of each other, a group defined as said R or a group represented by the following formula (5): 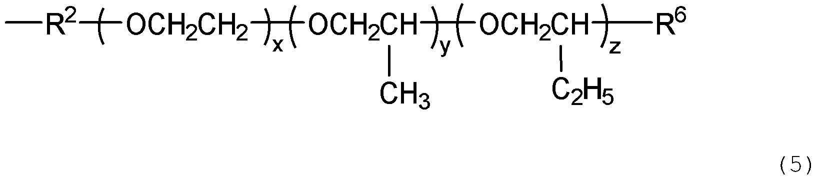 wherein R², x, y, and z are as defined above, R⁶ is a monovalent organic group having a radical-polymerizable group, and the parenthesized oxyalkylene units may form a block structure or randomly bond,
with the proviso that one or more of R⁵s are the group represented by said formula (5), and the parenthesized siloxane units in formula (4) may randomly bond,
wherein the extracted water obtained by diluting the radical-polymerizable group-containing organopolysiloxane five-fold with toluene, then adding purified water in an amount of twice the mass of the radical-polymerizable group-containing organopolysiloxane, followed by shaking for 2 hours has an electrical conductivity of 8 mS/m or less.

The present invention provides the radical-polymerizable group-containing organopolysiloxane, further comprising at least one constituent feature selected from the following [1] to [4].
[1] The radical-polymerizable group-containing organopolysiloxane, wherein the radical-polymerizable group is a group having a (meth)acryloyl group.
[2] The radical-polymerizable group-containing organopolysiloxane, wherein the amount of a chloride ion of the radical-polymerizable group-containing organopolysiloxane is 2 ppm or less.
[3] The radical-polymerizable group-containing organopolysiloxane, wherein an amount of a chlorine atom contained in the radical-polymerizable group-containing organopolysiloxane is 25 ppm or less as determined by oxidative decomposition-coulometric titration with a trace chlorine analyzer.
[4] The radical-polymerizable group-containing organopolysiloxane, wherein an amount of a nitrogen atom contained in the radical-polymerizable group-containing organopolysiloxane is 25 ppm or less as determined by oxidative decomposition-chemiluminescence with a trace nitrogen analyzer.

### EFFECTS OF THE INVENTION

The remaining hydrochloride of an organic base is difficult to remove by filtration only but, according to the present invention, an amount of the hydrochloride of the organic base remaining and dissolving in a radical-polymerizable group-containing organopolysiloxane can be reduced. As a result, a radical-polymerizable group-containing organopolysiloxane from which any organic salt is not precipitated for a long period is provided with a high preparation efficiency.

### MODE FOR CARRYING OUT THE INVENTION

A preparation method of the present invention will be explained below in detail.

The present invention is a method for preparing a radical-polymerizable group-containing organopolysiloxane, and particularly a method for preparing an organopolysiloxane having a (meth)acryloyl group (hereinafter, also referred to as a (meth)acrylic-modified siloxane compound). The organopolysiloxane has a radical-polymerizable group at one or more terminals or side chains of the organopolysiloxane.

The present invention is, more specifically, a method for preparing a radical-polymerizable group-containing organopolysiloxane comprising the following three steps:
(1) a reaction step of reacting (A) an organopolysiloxane having one or more monovalent organic groups per molecule, wherein the organic group has a group, at a terminal, selected from a hydroxy group, a thiol group, and an amino group having an active hydrogen with (B) a radical-polymerizable group-containing carboxylic acid chloride in the presence of (C) an organic base to obtain the radical-polymerizable group-containing organopolysiloxane;
(2) a filtration step of removing a hydrochloride of the organic base generated in the reaction step with a filtration to obtain a crude product; and
(3) a purification step of adding silica gel in 0.5 to 10 parts by mass, relative to 100 parts by mass of nonvolatile components contained in the crude product, followed by stirring and filtration under a pressure.

Each of the steps will be explained in further detail below.

### [Reaction step]

First, the method for preparing the radical-polymerizable group-containing organopolysiloxane of the present invention includes a reaction step of reacting (A) an organopolysiloxane having one or more monovalent organic groups (hereinafter, referred to as reactive organic groups) per molecule, wherein the organic group has a group, at a terminal, selected from a hydroxy group, a thiol group, and an amino group having an active hydrogen with (B) a radical-polymerizable group-containing carboxylic acid chloride in the presence of (C) an organic base to thereby obtain a radical-polymerizable group-containing organopolysiloxane.

### [Organopolysiloxane (A)]

The component (A) is the organopolysiloxane having one or more of the afore-mentioned reactive organic groups per molecule. The organopolysiloxane is reacted with (B) the radical-polymerizable group-containing carboxylic acid chloride, that will be explained below, to form an ester bond, a thioester bond, or an amide bond, each depending on the reactive organic groups, to give a radical-polymerizable group-containing organopolysiloxane.

The organopolysiloxane has one or more of the afore-mentioned reactive organic groups, per molecule, has preferably 1 to 10, more preferably 1 to 5, even more preferably 1 to 3 of the reactive organic groups, per molecule. Among the reactive organic groups, a group containing a hydroxy group or an amino group having an active hydrogen is preferred in view of ease of synthesis.

The component (A) is preferably an organopolysiloxane represented by the following formula (1): 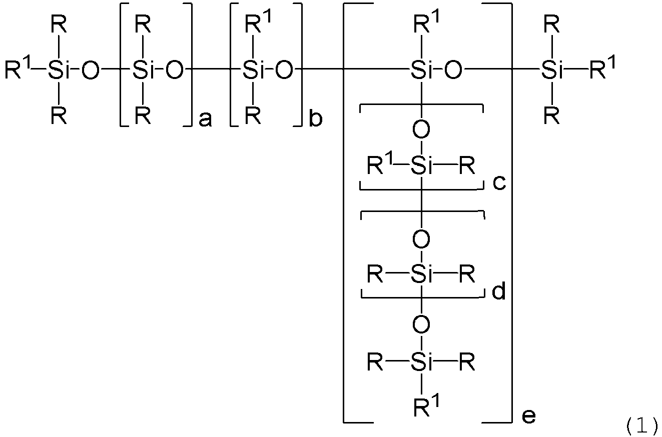 wherein, in formula (1), R represents, independently of each other, a monovalent hydrocarbon group having 1 to 10 carbon atoms, a, b, c, and d are, independently of each other, an integer of 0 to 500, e is an integer of 0 to 10, with the proviso that 0 ≤ a + b + (c + d)×e ≤ 500, and R¹ represents, independently of each other, a group defined by the R, or a group represented by the following formula (2) or (3): 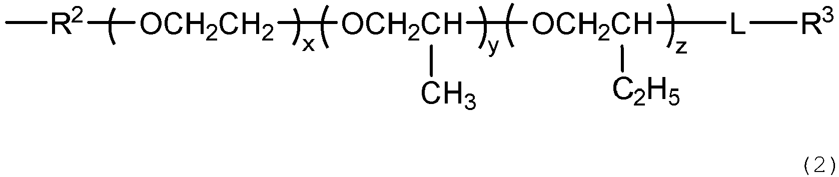 wherein, in formula (2), R² represents a divalent hydrocarbon group having 3 to 20 carbon atoms, R³ represents a hydrogen atom or a monovalent hydrocarbon group having 1 to 6 carbon atoms, L represents an oxygen atom or a sulfur atom, x, y, and z are, independently of each other, an integer of 0 to 50, satisfying an equation of 0 ≤ x + y + z ≤ 50, and the parenthesized oxyalkylene units may form a block structure or randomly bond; 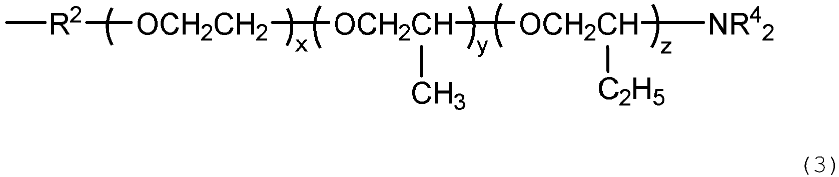 wherein, in formula (3), R⁴ represents a hydrogen atom or a monovalent hydrocarbon group having 1 to 6 carbon atoms, R², x, y, and z are as mentioned above, the parenthesized oxyalkylene units may form a block structure or randomly bond,
with the proviso that one or more of R¹s are a group represented by formula (2) wherein R³ is a hydrogen atom, or a group represented by formula (3) wherein at least one of R⁴ is a hydrogen atom. In formula (1) above, the parenthesized siloxane unit may randomly bond.

In formula (1) above, R represents, independently of each other, a monovalent hydrocarbon group having 1 to 10 carbon atoms. Examples of the monovalent hydrocarbon group include an alkyl group having 1 to 10 carbon atoms, an aryl group having 6 to 10 carbon atoms, and an aralkyl group having 7 to 10 carbon atoms. Examples of the alkyl group include a methyl group, an ethyl group, a propyl group, a butyl group, a hexyl group, a decyl group, and a cyclohexyl group. Examples of the aryl group include a phenyl group and a tolyl group. Furthermore, examples of the aralkyl group include a benzyl group, a 2-phenylethyl group, and a 3-phenylpropyl group. Among them, in view of availability of raw materials, ease of preparation, and ease of siloxane characteristic expression, an alkyl group is preferred, and a methyl group is particularly preferred.

"a" is an integer of 0 to 500, preferably an integer of 5 to 200, more preferably an integer of 10 to 150. "b" is an integer of 0 to 500, preferably an integer of 0 to 100, more preferably an integer of 0 to 20, most preferably 0. "c" is an integer of 0 to 500, preferably an integer of 0 to 100, more preferably an integer of 0 to 20, most preferably 0. "d" is an integer of 0 to 500, preferably an integer of 5 to 200, more preferably an integer of 10 to 150. When "a", "b", "c", and "d" each exceed the afore-mentioned upper limits, the reactivity of the radical-polymerizable group-containing organopolysiloxane obtained is poor, and the compatibility with non-siloxane monomers and the like is poor. Furthermore, there is a risk that the compound may become highly viscous, resulting in poor handling, which is unfavorable. "e" is an integer of 0 to 10, preferably an integer of 0 to 5, more preferably 0. If e exceeds the afore-mentioned upper limits, there is a risk that the viscosity may become high, resulting in degradation of the handling, and reactivity with carboxylic acid chlorides also may be reduced.

"a", "b", "c", "d" and "e" satisfy an equation of 0 ≤ a + b + (c + d)×e ≤ 500, preferably 5 ≤ a + b + (c + d)×e ≤ 400, more preferably 15 ≤ a + b + (c + d)×e ≤ 200, even more preferably 20 ≤ a + b + (c + d)×e ≤ 100. If the value of a + b + (c + d)×e exceeds the afore-mentioned upper limits, there is a risk that the viscosity of the compound may become high, resulting in degradation of the handling.

R¹ represents, independently of each other, a group defined as the afore-mentioned R or a group represented by the following formula (2) or (3):

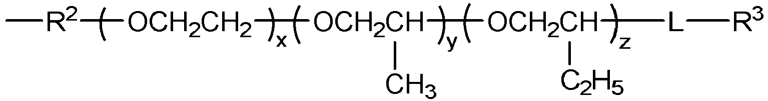

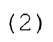

In formula (2), R² represents a divalent hydrocarbon group having 3 to 20 carbon atoms, R³ represents a hydrogen atom or a monovalent hydrocarbon group having 1 to 6 carbon atoms, and L represents an oxygen atom or a sulfur atom. x, y, and z are, independently of each other, an integer of 0 to 50, satisfying an equation of 0 ≤ x + y + z ≤ 50, and the parenthesized oxyalkylene units may form a block structure or randomly bond.

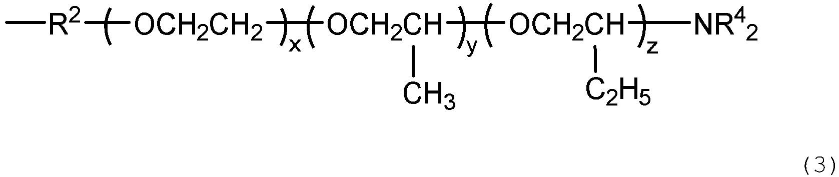

In formula (3), R⁴ represents a hydrogen atom or a monovalent hydrocarbon group having 1 to 6 carbon atoms. R², x, y, and z are as mentioned above, and the parenthesized oxyalkylene unit may form a block structure or randomly bond.

In formula (1) above, 1 or more, preferably 1 to 10, more preferably 1 to 5, even more preferably 1 to 3 of R¹s are a group represented by formula (2) wherein R³ is a hydrogen atom, or a group represented by formula (3) wherein at least one R⁴ is a hydrogen atom.

In formula (1) above, the parenthesized siloxane units may randomly bond.

In formula (2) or (3) above, R² represents a divalent hydrocarbon group having 3 to 20, preferably 3 to 10 carbon atoms. The divalent hydrocarbon group may be linear or branched-chain, and may have a cyclic structure such as a cycloalkylene group and a phenylene group partway through the molecular chain. The divalent hydrocarbon group is preferably a trimethylene group and a methyl propylene group.

In formula (2) above, R³ represents a hydrogen atom or a monovalent hydrocarbon group having 1 to 6 carbon atoms. The monovalent hydrocarbon group having 1 to 6 carbon atoms is preferably a methyl group or an ethyl group, and R³ is more preferably a hydrogen atom.

In formula (2) above, L represents an oxygen atom or a sulfur atom, preferably an oxygen atom.

In formula (3) above, R⁴ represents, independently of each other, a hydrogen atom or a monovalent hydrocarbon group having 1 to 6 carbon atoms, and the monovalent hydrocarbon group having 1 to 6 carbon atoms is preferably a methyl group or an ethyl group. At least one R⁴ is preferably a hydrogen atom.

In formula (2) or formula (3) above, x, y, and z are, independently of each other, an integer of 0 to 50, preferably an integer of 0 to 30. Further, x, y, and z are an integer satisfying an equation of 0 ≤ x + y + z ≤ 50, preferably 0 ≤ x + y + z ≤ 30. Furthermore, in formula (3) above, 0 ≤ x + y + z ≤ 10 is more preferred, and x + y + z = 0 is even more preferred.

The afore-mentioned values of x, y, and z may be optionally selected within the afore-mentioned ranges to change the HLB value of the product according to the ratios relative to other components of siloxane chain lengths and the like. If the value of x, y, and z individually exceed the afore-mentioned upper limits, or if a value of x + y + z exceeds the afore-mentioned upper limits, there is a risk that the viscosity of the compound may become high, resulting in degradation of the handling, as well as a reduction of reactivity with a carboxylic acid chloride.

### [(B) Radical-polymerizable group-containing carboxylic acid chloride]

The radical-polymerizable group-containing carboxylic acid chloride (B) of the present invention reacts with the afore-mentioned component (A) to give a radical-polymerizable group-containing organopolysiloxane. Examples of the radical-polymerizable group-containing carboxylic acid chloride include acryloyl chloride, methacryloyl chloride, 3-butenoyl chloride, 4-vinyl benzoyl chloride, crotonoyl chloride, isocrotonoyl chloride, and cinnamoyl chloride, preferably acryloyl chloride or methacryloyl chloride.

The amount of the radical-polymerizable group-containing carboxylic acid chloride is such that a ratio of an amount of the carboxylic acid chloride is preferably 1.0 to 5.0 equivalents, more preferably 1.0 to 1.5 equivalents, even more preferably 1.0 to 1.05 equivalents, relative to the total amount of reactive organic groups, i.e. the number of moles or total number of reactive groups in organopolysiloxane (A). If the amount is less than the afore-mentioned lower limits, the reactive organic groups of the raw-material organopolysiloxane remain in the product, and so the purity of the obtained compound is reduced. Furthermore, if the amount exceeds the afore-mentioned upper limits, a large amount of unreacted carboxylic acid chlorides remains after the reaction, which is unfavorable because the amount of reagents in quenching in the post-treatment step, that will be explained below, increases, and more time is necessary.

### [(C) Organic base]

The organic base (C) functions as a catalyst for reacting the reactive organic group-containing organopolysiloxane (A) with the radical-polymerizable group-containing carboxylic acid chloride (B). The organic base also functions as an acid scavenger for capturing hydrogen chlorides generated as a reaction byproduct. The organic base is preferably soluble in an organic solvent (D), that will be explained below. Furthermore, preferred is the organic base easily removeable from the system after the reaction. Therefore, the boiling point is preferably 150 °C or less, more preferably 60 to 120 °C at an atmospheric pressure of 1,013 hPa.

The organic base (C) captures hydrochloric acid to generate an organic base hydrochloride. The organic base hydrochloride is preferably insoluble in the components (A) and (B), in the target compound, radical-polymerizable group-containing organopolysiloxane, and in the organic solvent (D) that will be explained below. When the organic solvent is insoluble, the greater part of the organic base hydrochloride may be easily removed by filtration.

The organic base is preferably an organic amine because organic amines satisfy the afore-mentioned requirements. Examples of the organic base include alkylamines such as diethylamine, triethylamine, tri-n-propylamine, and tri-n-butylamine; alicyclic amines such as diazabicycloundecene and 1,4-diazabicyclo[2.2.2]octane, and aromatic heterocyclic amines such as pyridine. Among them, triethylamine and pyridine are particularly preferred.

The amount of the organic base (C) is, as a molar ratio, preferably 1.0 to 5.0 equivalents, even more preferably 1.1 to 1.5 equivalents, relative to the total amount of the reactive organic groups of the afore-mentioned organopolysiloxane (A). If the amount of the organic base is less than the afore-mentioned lower limits, there is a risk that the hydrochloric acid generated *in situ* cannot be completely captured, the reaction system may become acidic, and siloxane bonds may be broken. Furthermore, if the amount of the organic base exceeds the afore-mentioned upper limits, an excessive unreacted organic base remains after the reaction, and the step of removing the organic base takes time, that is not preferable.

### [(D) Organic solvent]

Although the reaction step of the present invention may be carried out without a solvent, the reaction is accompanied by pronounced heat generation, and so it is preferred to use the organic solvent (D) in addition to the afore-mentioned components (A) to (C). By using the organic solvent, the heat generation may be suppressed. It is sufficient for the organic solvent to be able to dissolve the afore-mentioned component (A) and to be inert relative to the reaction of the present invention.

Examples of the organic solvent include aromatic hydrocarbons such as toluene and xylene; aliphatic hydrocarbons such as hexane, heptane, octane, and isooctane; halogenated hydrocarbons such as chloroform and dichloromethane; esters such as ethyl acetate and butyl acetate; and ethers such as diethyl ether and diisopropyl ether, among which toluene, xylene, butyl acetate, and diisopropyl ether are preferred. Alcohols such as methanol, ethanol, and propanol; and amine solvents such as pyridine react with acid chloride and are therefore not preferable.

The added amount of the organic solvent (D), relative to 100 parts by mass of the component (A), is preferably 10 to 200 parts by mass, more preferably 30 to 150 parts by mass, even more preferably 50 to 100 parts by mass.

### [Antioxidant or reducing agent]

The reaction of the organopolysiloxane (A) with the carboxylic acid chloride (B) may be carried out in the presence of an antioxidant or a reducing agent. It is sufficient for the antioxidant and the reducing agent to be soluble in a mixture of the reactive organic group-containing organopolysiloxane (A), any organic solvent (D), and the organic base (C).

Examples of the antioxidant or the reducing agent include, for example, phenolic compounds such as 4,4'-butylidenebis(6-*t-*butyl-*m*-cresol), 2,2'-methylenebis(4-methyl-6-*t*-butylphenol), 2,2'-methylenebis(4-ethyl-6-t-butylphenol), 2,6-di-*t*-butyl-p-cresol, 2,5-di-*t*-amyl-hydroquinone, 2,5-di-*t*-butyl-hydroquinone, 2-*t*-butyl-hydroquinone, hydroquinone monomethyl ether, and 2-*t*-butyl-hydroxyanisole; L-ascorbic acid, erythorbic acid, citric acid, tocopherol, catechol, phenothiazine, and 2,2,6,6-tetramethylpiperidine 1-oxyl. Among them, 2,6-di-*t*-butyl-*p*-cresol, of which the reactivity with acid chlorides of the hydroxyl groups in the molecule is low, is particularly preferred. The antioxidant and the reducing agent may be used alone or in combination.

The amount of the antioxidant or the reducing agent, relative to 100 parts by mass of the organopolysiloxane (A), is 0.05 parts by mass or more and 5 parts by mass or less, more preferably 0.07 parts by mass or more and 3 parts by mass or less, even more preferably 0.1 parts by mass or more and 2 parts by mass or less. By using an amount of the antioxidant or the reducing agent within the ranges, coloration that may occur during the reaction of the present invention may be suppressed. If the amount is less than the afore-mentioned lower limits, the effect of suppressing the coloration is reduced. Furthermore, if the amount exceeds the afore-mentioned upper limits, there is a risk that many side reactions with the radical-polymerizable group-containing carboxylic acid chloride may occur, and the impurity amount may increase.

### [Reaction temperature]

The reaction temperature of the afore-mentioned carboxylic acid chloride (B) and the organopolysiloxane (A) is not particularly limited. It is sufficient to be the boiling point or lower when the organic solvent (D) is used. Preferred is 0 to 120°C, even more preferably 0 to 80°C. When the reaction temperature exceeds the afore-mentioned upper limits, there is a risk that radical-polymerizable groups introduced to an organopolysiloxane may cause thermal polymerization during the reaction. When the reaction temperature is less than the afore-mentioned lower limits, the reactivity degrades and is inefficient.

### [Post-treatment step]

After the reaction step of the present invention, a post-treatment step of quenching unreacted carboxylic acid chlorides may be added. Quenching is preferred because unreacted carboxylic acid chlorides remaining in the product are reduced. The quenching may be carried out by any method, but preferred is a method in which a lower alcohol such as methanol or ethanol, water, or the like is added because the quenching by-products are easy to remove.

### [Filtration step]

The filtration step of the present invention is a step of removing a hydrochloride of the organic base generated in the afore-mentioned reaction step with a filtration to obtain a crude product. The filtration method and equipment are not particularly limited, and conventionally-known methods and equipment may be used.

### [Purification step]

The purification step of the present invention is a step of adding silica gel at 0.5 to 10% by mass, relative to the amount of nonvolatile components of the afore-mentioned crude product, stirring, and then conducting filtration under pressure. For conducting the addition of silica gel to the crude product, stirring, and then filtration under pressure, the method and equipment are not particularly limited as in the afore-mentioned filtration step, and it is sufficient to select a filtration method and equipment capable of pressurizing.

The particle size of the silica gel is preferably in the range of 40 to 250 µm, more preferably in the range of 40 to 100 µm. As the ratio of the silica gel having small particle sizes is increased, the filter plate becomes clogged more easily, and so there is a risk that the addition of a filter aid may be necessary. Furthermore, as the particle size is larger, the adsorption efficiency decreases, and a greater amount of silica gel must be used. An average particle size of 40 to 250 µm is preferred, and an average particle size of 40 to 100 µm is more preferred. In the present invention, the average particle size refers to the value of the median diameter (d50) of a volumetric particle size distribution as determined using a laser diffraction particle size distribution analyzer.

The added amount of silica gel is 0.5 to 20 parts by mass, preferably 0.5 to 10 parts by mass, more preferably 0.5 to 5 parts by mass, relative to 100 parts by mass of the amount of nonvolatile components contained in the afore-mentioned crude product. More preferably, according to a method in which solvent distillation is carried out after the afore-mentioned filtration step and before the afore-mentioned purification step, the added amount of silica gel is preferably 0.5 to 5 parts by mass, relative to 100 parts by mass of the amount of nonvolatile components contained in the afore-mentioned crude product. According to a method in which solvent distillation is carried out after the afore-mentioned the filtration step and the afore-mentioned purification step, the added amount of silica gel is preferably 10 to 15 parts by mass, relative to 100 parts by mass of the amount of nonvolatile components contained in the afore-mentioned crude product.

The stirring time after adding silica gel is preferably 1 hour or more, more preferably 3 to 12 hours. The temperature when stirring may be in the range of 0 to 40°C, preferably 15 to 30°C. Furthermore, when the afore-mentioned crude product contains the organic solvent (D), it is preferred to determine the content of the nonvolatile components contained in the afore-mentioned crude product before adding the silica gel. Examples of the determination method include methods such as the following:
(1) Precisely weigh 3 g of the crude product into a 6 cm diameter aluminum Petri dish, and heat it at 105°C for 3 hours in a circulating hot-air oven.
(2) After the heating, allow the aluminum petri dish to cool to 25°C, and precisely weigh again to determine the amount of nonvolatile components.

### [Solvent distillation step]

The preparation method of the present invention may further comprise a solvent distillation step to remove the organic solvent (D) and volatile components, if necessary. The solvent distillation step may be carried out after the afore-mentioned filtration step (i.e., before the purification step), or may be carried out after the purification step. When the solvent distillation step is carried out after the filtration step, it is preferred because the removal efficiency of an organic base hydrochloride by the silica gel in the purification step may be increased, and the silica gel amount may be reduced. Furthermore, when the solvent distillation step is carried out after the purification step it is preferred because the viscosity during the purification step may be reduced by the organic solvent (D), and the treatment and filtering with silica gel is easy.

In the radical-polymerizable group-containing organopolysiloxane obtained according to the preparation method of the present invention, the amount of the organic base hydrochloride remaining dissolved in the organopolysiloxane is reduced, and re-precipitation of the afore-mentioned organic base hydrochloride in the organopolysiloxane over time is suppressed. According to the method of the present invention, the precipitation of the organic base hydrochloride in the organopolysiloxane is suppressed even after leaving it for three months at a temperature of 25°C, preferably after leaving it for three months or more at a temperature of 20 to 30°C.

Furthermore, when the organic base hydrochloride generated in the afore-mentioned reaction is triethylamine hydrochloride, the presence of precipitation of triethylamine hydrochloride over time may be predicted using a simplified evaluation. Specifically, a correlation has been verified in which, when a radical-polymerizable group-containing organopolysiloxane is mixed with 2 times the mass of hexane, there will be no precipitation of triethylamine hydrochloride over time if the appearance of the mixture is transparent, and if the appearance of the mixture is slightly cloudy to cloudy, there will be precipitation of triethylamine hydrochloride over time.

One or more of the following measured values may indicate that the amount of organic salts dissolved in the radical-polymerizable group-containing organopolysiloxane is reduced. It is particularly preferred for all of the following measured values to be satisfied.

Specifically, the content of organic salts dissolved in the radical-polymerizable group-containing organopolysiloxane is extremely low when at least one, and particularly when all, of the following measured values are satisfied:
1) the electrical conductivity of the extracted water containing the radical-polymerizable group-containing organopolysiloxane is a value of 8 mS/m or less, preferably no more than 5 mS/m,
2) the amount of a chloride ion in the organopolysiloxane is 2 ppm or less, preferably 1 ppm or less,
3) the amount of a chlorine atom of the radical-polymerizable group-containing organopolysiloxane is 25 ppm or less, preferably 20 ppm or less, and
4) the amount of a nitrogen atom of the radical-polymerizable group-containing organopolysiloxane is 25 ppm or less, preferably 20 ppm or less.

The lower limits of the afore-mentioned measured values are not limited, and may be less than the detection limit. Accordingly, the radical-polymerizable group-containing organopolysiloxane suppresses re-precipitation of the afore-mentioned organic base hydrochloride in the organopolysiloxane over time.

The determination methods are as follows:

### 1) Electrical conductivity of extracted water

Purified water of 2 times the mass of the afore-mentioned organopolysiloxane is added to a solution of a radical-polymerizable group-containing organopolysiloxane diluted five-fold with toluene, the reaction mixture is shaken for 2 hours, and then the electrical conductivity of the extracted water thus obtained is determined with a conductivity meter.

### 2) Chloride ion amount contained in the radical-polymerizable group-containing organopolysiloxane

The amount of a chloride ion is the value obtained by adding purified water of 2 times the mass of the afore-mentioned organopolysiloxane to a solution of a radical-polymerizable group-containing organopolysiloxane diluted five-fold with toluene, shaking for 2 hours, determining the amount of a chloride ion in the extracted water thus obtained, and converting the result into the content in the radical-polymerizable group-containing organopolysiloxane.

### 3) Chlorine amount

The amount of a chlorine atom of the radical-polymerizable group-containing organopolysiloxane is determined by oxidative decomposition-coulometric titration using a trace chlorine analyzer.

### 4) Nitrogen amount

The amount of a nitrogen atom of the radical-polymerizable group-containing organopolysiloxane is determined by oxidative decomposition-chemiluminescence using a trace nitrogen analyzer.

### [Radical-polymerizable group-containing organopolysiloxane]

The radical-polymerizable group-containing organopolysiloxane is preferably as shown in the following formula (4): 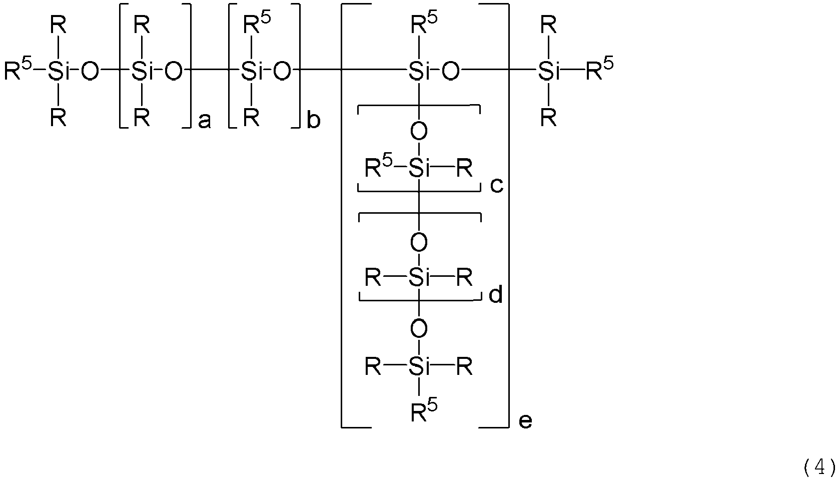 wherein, in formula (4), R, a, b, c, d, and e are the same as the groups defined for formula (1) above, and R⁵ represents, independently of each other, the afore-mentioned group represented by R or a group represented by the following formula (5): 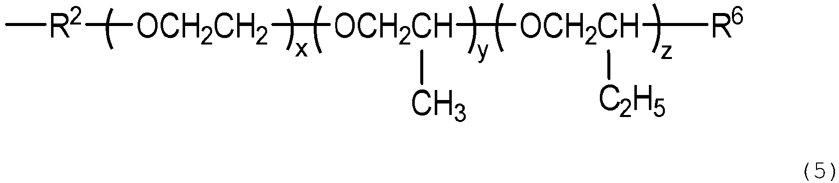 wherein, in formula (5), R², x, y, and z are the same as the groups defined for formula (2) above, and R⁶ represents a monovalent organic group containing a radical-polymerizable group. The parenthesized oxyalkylene units may form a block structure or randomly bond. However, one or more of the afore-mentioned R⁵ represents a group represented by formula (5) above. The parenthesized siloxane units in formula (4) may form a block structure or randomly bond.

When the radical-polymerizable group-containing organopolysiloxane has one radical-polymerizable group, a siloxane chain is incorporated as a pendant in the backbone of the polymer forming the cured product. As a result, the cured product may be provided with antifoaming properties, water repellency, hydrophilicity, releasability, stain resistance, sliding properties and the like of the siloxane chain.

When two or more radical-polymerizable groups are present, the radical-polymerizable groups form the cured product by acting as crosslinking components. A siloxane that does not have a radical-polymerizable group cannot be cured. Such siloxane compounds, if present, may cause bleeding from the cured product over time, may degrade the compatibility between other radical-polymerizable group-containing organopolysiloxanes when curing, cause surface material detachment and/or reduced adhesion, etc.

When the radical-polymerizable group-containing organopolysiloxane has many radical-polymerizable groups, especially a number exceeding the afore-mentioned upper limit, the characteristics as crosslinking components become strong, and it becomes difficult for the cured product to be provided with the characteristics such as antifoaming properties, water repellency, releasability, stain resistance, sliding properties, heat resistance, cold resistance, electrical insulation, flame retardance, etc. provided by the siloxane chain. Furthermore, polymerization is easily triggered by heat or light, so that there is a risk that a polymerization reaction may proceed during storage, and preservation and handling may degrade.

### EXAMPLES

The present invention will be described more specifically with reference to the following Examples and Comparative Examples; however, the present invention is not limited to the following Examples.

### [Example 1]

Were placed 800 g of toluene, 500 g of polyether-modified siloxane having carbinols at both terminals represented by the following formula (7) (OH value of about 42.5 mg KOH/g), 0.45 g of 2,6-di-*t*-butyl-*p*-cresol, and 47.8 g of triethylamine, and 36.0 g of acryloyl chloride was added dropwise to the mixture at an internal temperature of 60°C. After the completion of the dropwise addition, stirring was carried out for 2 hours at 70°C, after which the unreacted acryloyl chloride was treated with methanol, and the solid triethylamine hydrochloride formed was removed by filtration under pressure using a filter plate (NA-10 manufactured by ADVANTEC). Then, about 3 g of the solution thus obtained was placed in an aluminum petri dish and dried for 3 hours at 105°C, after which the solution concentration was calculated from the mass of the remaining nonvolatile components. On this basis, silica gel 60N (spherical, neutral, particle size of 40 to 100 µm, manufactured by Kanto Chemical Co., Ltd.) was added to the solution thus obtained in an amount of 10% by mass, relative to the amount of nonvolatile components in the solution, and stirred for 3 hours. After filtration under pressure of the post-treatment solution using a filter plate (NA-10 manufactured by ADVANTEC), the solvent and unreacted raw materials were evaporated off under reduced pressure to obtain a radical-polymerizable group-containing organopolysiloxane 1 represented by the following formula (7') with a yield of 90%. 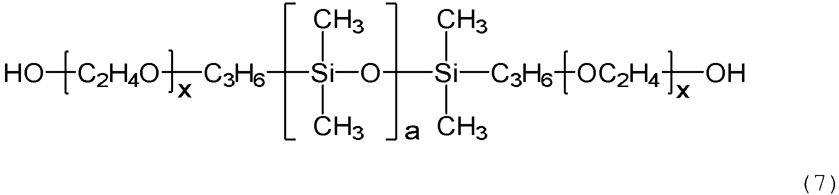 (wherein x = 12 and a = 19). 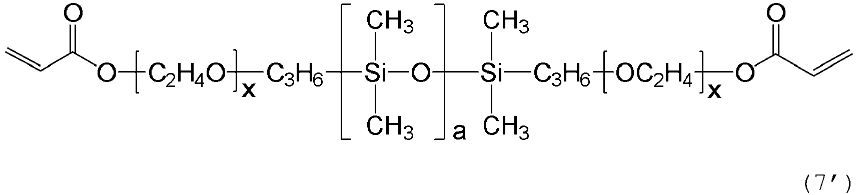 (wherein x = 12 and a = 19).

### [Example 2]

Were placed 800 g of toluene, 500 g of polyether-modified siloxane having carbinols at both terminals represented by formula (7) above (OH value of about 42.5 mg KOH/g), 0.45 g of 2,6-di-*t*-butyl-*p*-cresol, and 47.8 g of triethylamine, and 36.0 g of acryloyl chloride was added dropwise to the mixture at an internal temperature of 60°C. After the completion of the dropwise addition, stirring was carried out for 2 hours at 70°C, after which the unreacted acryloyl chloride was treated with methanol, and the triethylamine hydrochloride formed was removed by filtration under pressure using a filter plate (NA-10 manufactured by ADVANTEC).

Continuing, the solvent and unreacted raw materials were evaporated off under reduced pressured, after which silica gel 60N (spherical, neutral, particle size of 40 to 100 µm, manufactured by Kanto Chemical Co., Ltd.) was added in 1% by mass, relative to the crude product (the nonvolatile components) thus obtained, stirred for 3 hours, and the post-treatment solution was subjected to filtration under pressure using a filter plate (NA-10 manufactured by ADVANTEC) to obtain a radical-polymerizable group-containing organopolysiloxane 2 represented by formula (7') above with a yield of 87%.

According to the afore-mentioned method of the invention of the application, a radical-polymerizable group-containing organopolysiloxane, and particularly an acrylic-modified siloxane, may be obtained in a higher yield than purification methods such as washing, although the yield was slightly reduced by wall loss and absorption by the filter plate during purification.

### [Comparative Example 1]

The prosecutions of Example 1 were repeated except that stirring of silica gel 60N and the subsequent filtration under pressure were not carried out, to thereby obtain a radical-polymerizable group-containing organopolysiloxane 3 represented by formula (7') above with a yield of 95%.

The electrical conductivity of the extracted water, the amount of a chloride ion of the extracted water, the amount of a chlorine atom, and the amount of a nitrogen atom were determined using the following method for each radical-polymerizable group-containing organopolysiloxane obtained in the afore-mentioned Examples and Comparative Example. Furthermore, a simplified evaluation was carried out by mixing each radical-polymerizable group-containing organopolysiloxane with hexane, and the appearance was observed after leaving it for three months.

### [Electrical conductivity of extracted water]

Purified water of 2 times the mass of the organopolysiloxane was added to a solution of a radical-polymerizable group-containing organopolysiloxane diluted five-fold with toluene and shaken for 2 hours, after which the electrical conductivity of the extracted water thus obtained was determined using a conductivity meter.

### [Chloride ion amount contained in the sample, determined from extracted water]

Purified water of 2 times the mass of the organopolysiloxane was added to a solution of a radical-polymerizable group-containing organopolysiloxane diluted five-fold with toluene, and shaken for 2 hours, after which the Cl amount of the extracted water thus obtained was determined using ion chromatography and converted into the amount of a chloride ion in the radical-polymerizable group-containing organopolysiloxane.

### [Chlorine amount]

A radical-polymerizable group-containing organopolysiloxane was diluted five-fold with toluene, and the amount of a chlorine atom was determined by oxidative decomposition-coulometric titration using a trace chlorine analyzer.

### [Nitrogen amount]

A radical-polymerizable group-containing organopolysiloxane was diluted five-fold with toluene, and the amount of a nitrogen atom was determined by oxidative decomposition-chemiluminescence using a trace nitrogen analyzer.

**[Table 1]**

| | Example | | Comparative Example |
|---|---|---|---|
| | 1 | 2 | 1 |
| Electrical conductivity of extracted water, mS/m | 7.9 | 4.0 | 11.2 |
| Chloride ion amount, ppm | <1 | <1 | 10 |
| Chlorine amount, ppm | 25 | 20 | 33 |
| Nitrogen amount, ppm | 25 | 20 | 45 |
| Appearance during mixing acrylic-modified siloxane with hexane acrylic-modified siloxane : hexane = 1:2 | Transparent | Transparent | Slightly cloudy |
| Appearance after three months at 25°C | Transparent | Transparent | Precipitation present |

As shown in Table 1 above, the radical-polymerizable group-containing organopolysiloxanes obtained by the preparation methods of Examples 1 and 2 according to the present invention satisfy all of the requirements the following 1) to 4).
1) The electrical conductivity of the extracted water containing the radical-polymerizable group-containing organopolysiloxane is a value of 8 mS/m or less.
2) The amount of a chloride ion in the organopolysiloxane is 2 ppm or less.
3) The amount of a chlorine atom of the radical-polymerizable group-containing organopolysiloxane is 25 ppm or less.
4) The amount of a nitrogen atom of the radical-polymerizable group-containing organopolysiloxane is 25 ppm or less.

The radical-polymerizable group-containing organopolysiloxanes obtained by the preparation methods of Examples 1 and 2 did not have precipitation over time as shown in Table 1 above. Meanwhile, the radical-polymerizable group-containing organopolysiloxane obtained by the method for preparing Comparative Example 1, which was a conventional method, did not satisfy the requirements 1) to 4) above, and precipitation occurred over time. Specifically, the radical-polymerizable group-containing organopolysiloxane obtained by the method for preparing Comparative Example 1 had the organic base hydrochloride which was precipitated over time.

According to the preparation method of the present invention, the amount of the organic base hydrochloride (particularly triethylamine hydrochloride) dissolved in the acrylic-modified siloxane was less than the radical-polymerizable group-containing organopolysiloxane obtained by the conventional preparation methods.

### INDUSTRIAL APPLICABILITY

According to the preparation method of the present invention, a radical-polymerizable group-containing organopolysiloxane, and particularly a (meth)acrylic-modified siloxane compound, may be provided with high preparation efficiency and with a reduced amount of dissolved organic salts. The organopolysiloxane was useful as a resin-modifying material added to thermosetting compositions or photocurable compositions such as coatings, film-forming agents, and resins.

## Claims

1. A method for preparing a radical-polymerizable group-containing organopolysiloxane, comprising a reaction step of reacting (A) an organopolysiloxane having one or more monovalent organic groups per molecule, wherein the organic group has a group, at a terminal, selected from a hydroxy group, a thiol group, and an amino group having an active hydrogen with (B) a radical-polymerizable group-containing carboxylic acid chloride in the presence of (C) an organic base to obtain the radical-polymerizable group-containing organopolysiloxane,
wherein the method comprises
a filtration step of removing a hydrochloride of the organic base (C) generated in the reaction step with a filtration to obtain a crude product, and
a purification step of adding silica gel in an amount of 0.5 to 20 parts by mass, relative to 100 parts by mass of a nonvolatile component contained in the crude product followed by stirring and filtration under a pressure.

2. The method for preparing a radical-polymerizable group-containing organopolysiloxane according to claim 1, wherein the organopolysiloxane (A) is represented by the following formula (1): 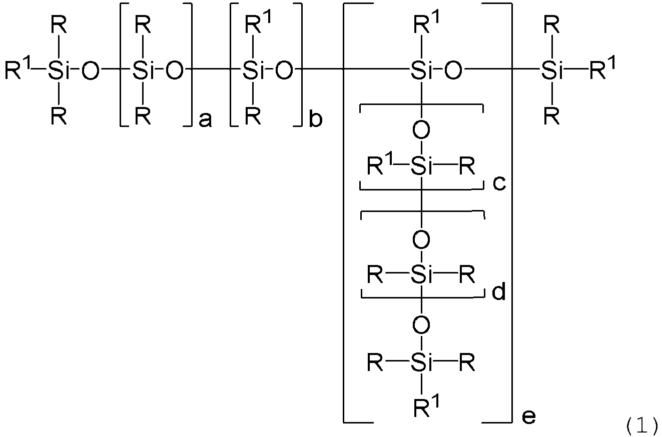
wherein R represents, independently of each other, a monovalent hydrocarbon group having 1 to 10 carbon atoms, a, b, c and d are, independently of each other, an integer of 0 to 500, e is an integer of 0 to 10, and a, b, c, d and e satisfies an equation of 0 ≤ a + b + (c + d)×e ≤ 500, and
R¹ represents, independently of each other, a group defined as R or a group represented by the following formula (2) or (3): 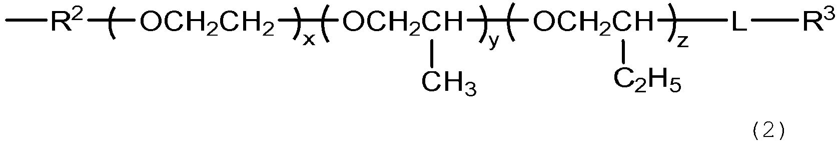
wherein R² represents a divalent hydrocarbon group having 3 to 20 carbon atoms, R³ represents a hydrogen atom or a monovalent hydrocarbon group having 1 to 6 carbon atoms, L represents an oxygen atom or a sulfur atom, x, y, and z are, independently of each other, an integer of 0 to 50, x, y, and z satisfies an equation of 0 ≤ x + y + z ≤ 50, and the parenthesized oxyalkylene units may form a block structure or randomly bond; 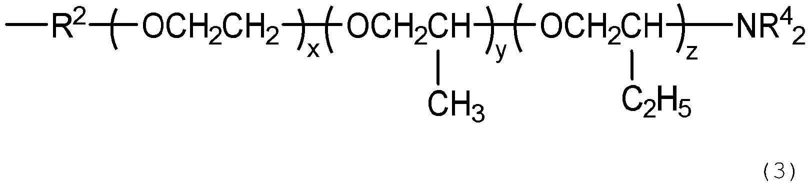
wherein R⁴ represents a hydrogen atom or a monovalent hydrocarbon group having 1 to 6 carbon atoms, R², x, y, and z are as defined above, and the parenthesized oxyalkylene units may form a block structure or randomly bond,
with the proviso that one or more of R¹s are a group represented by formula (2) wherein R³ is a hydrogen atom, or a group represented by formula (3) wherein at least one R⁴ is a hydrogen atom, and the parenthesized siloxane units in the formula (1) may randomly bond.

3. The method for preparing the radical-polymerizable group-containing organopolysiloxane according to claim 1, wherein component (B) is one or more selected from the group consisting of acryloyl chloride and methacryloyl chloride.

4. The method for preparing the radical-polymerizable group-containing organopolysiloxane according to claim 1, wherein component (C) is an organic amine.

5. The method for preparing the radical-polymerizable group-containing organopolysiloxane according to claim 1, wherein an amount of precipitate, as determined after leaving for three months at 25 °C, of the hydrochloride of the organic base (C) contained in the radical-polymerizable group-containing organopolysiloxane obtained in the purification step is 1 ppm or less, relative to the mass of the organopolysiloxane.

6. A radical-polymerizable group-containing organopolysiloxane represented by the following formula (4): 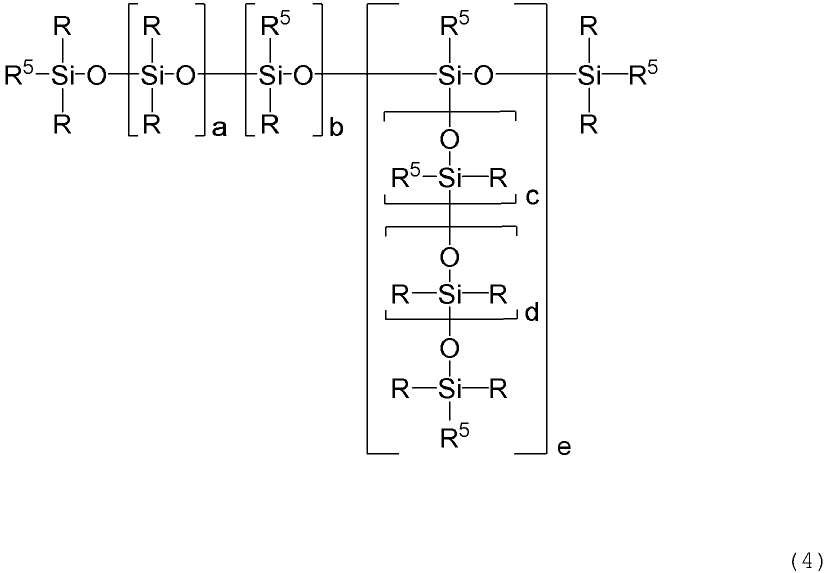 wherein R, a, b, c, d and e are as defined above, and R⁵ represents, independently of each other, a group defined as said R or a group represented by the following formula (5): 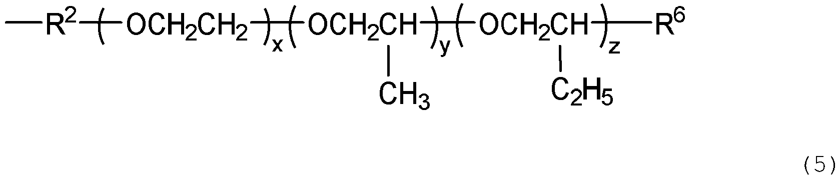 wherein R², x, y, and z are as defined above, R⁶ is a monovalent organic group having a radical-polymerizable group, and the parenthesized oxyalkylene units may form a block structure or randomly bond,
with the proviso that one or more of R⁵s are the group represented by said formula (5), and the parenthesized siloxane units in formula (4) may randomly bond,
wherein the extracted water obtained by diluting the radical-polymerizable group-containing organopolysiloxane five-fold with toluene, then adding purified water in an amount of twice the mass of the radical-polymerizable group-containing organopolysiloxane, followed by shaking for 2 hours has an electrical conductivity of 8 mS/m or less.

7. The radical-polymerizable group-containing organopolysiloxane according to claim 6, wherein the radical-polymerizable group is a group having a (meth)acryloyl group.

8. The radical-polymerizable group-containing organopolysiloxane according to claim 6, wherein the amount of the chloride ion contained in the radical-polymerizable group-containing organopolysiloxane is 2 ppm or less.

9. The radical-polymerizable group-containing organopolysiloxane according to claim 6, wherein the amount of a chlorine atom contained in the radical-polymerizable group-containing organopolysiloxane is 25 ppm or less as determined by oxidative decomposition-coulometric titration with a trace chlorine analyzer.

10. The radical-polymerizable group-containing organopolysiloxane according to claim 6, wherein the amount of a nitrogen atom contained in the radical-polymerizable group-containing organopolysiloxane is 25 ppm or less as determined by oxidative decomposition-chemiluminescence with a trace nitrogen analyzer.
